# EUROPEAN PATENT APPLICATION

(11) **EP 4 468 015 A1**
(43) Date of publication of application: **27.11.2024**
(21) Application number: 23175184.3
(22) Date of filing: 24.05.2023
(51) Int. Cl.: G01S 5/00, H04W 64/00, H04L 67/12, H04L 67/52, H04W 4/02

(54) **METHOD OF TRANSMITTING A SIGNAL COMPRISING POSITIONING-BASED INFORMATION FROM A LOCATION MANAGEMENT FUNCTION ENTITY OF A RADIO NETWORK**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

A method of transmitting a transmitting a signal (S2) comprising positioning-based information from a location management function entity (20) of a radio network (10) to a first radio node (12) of the radio network (10), the method (100) comprising:
- Receiving (110) a request signal (51) comprising a request for positioning-based information with respect to at least one second radio node of the radio network (10) by the location management function entity (20); and
- Transmitting (130) a response signal (S2) comprising the requested positioning-based information from the location management function entity (20) to the first radio node (12), wherein the positioning-based information comprised by the response signal (S2) is based on positioning-related information of the at least one second radio node collected by the location management function entity (20).

## Description

The invention concerns a method of transmitting a signal comprising positioning-based information from a location management function entity of a radio network to a first radio node of the radio network, and a corresponding method of receiving a signal comprising positioning-based information provided by a location management function entity of a radio network. Further, the invention concerns an associated method of transmitting a signal comprising positioning-based information from a service-providing network entity of a radio network to a first radio node of the radio network and a corresponding method of receiving a signal comprising positioning-based information provided by a service-providing network entity of a radio network. Moreover, the invention concerns a radio node, a network entity, a computer program, and a non-transitory computer readable medium.

### Background

In 3GPP specifications, the location management function (LMF) is responsible for providing location information to the user equipment (UE). For a (semi-) autonomous vehicle there is a need for information about position, speed, heading, acceleration etc. of other road users in its surrounding. Vehicles can share such information by ETSI ITS messages such as a cooperative awareness message (CAM).

### Disclosure of the invention

According to a first aspect, there is provided a method of transmitting a signal comprising positioning-based information from a location management function entity of a radio network to a first radio node of the radio network.

The method according to the first aspect comprises:
- Receiving a request signal comprising a request for positioning-based information with respect to at least one second radio node of the radio network by the location management function entity; and
- transmitting a response signal comprising the requested positioning-based information from the location management function entity to the first radio node, wherein the positioning-based information comprised by the response signal is based on positioning-related information of the at least one second radio node collected by the location management function entity.

The location management function entity can be preferably understood as a network entity hosting a location management function, particularly as specified in 3GPP TS 29.572.

The received request signal is transmitted from the first radio node, preferably using radio resources of the radio network, to the location management function entity, e.g., via a base station of the radio network. The transmitted response signal is transmitted from location management function entity preferably using radio resources of the radio network, to the first radio node, e.g., via a base station of the radio network.

The request comprised by the request signal may comprise a request for positioning-based information for one or several specific or specified second radio nodes of the radio network. Additionally or alternatively, the request may comprise a request for positioning-based information for all radio nodes within a specific or specified region of interest. Correspondingly, the response signal may comprise the positioning-based information for the one or several specific or specified second radio nodes of the radio network and/or for all radio nodes within the specific or specified region of interest.

Collecting positioning-related information can be preferably understood as requesting and/or accessing and/or receiving positioning-related information and storing the requested and/or access and/or received positioning-related information. The positioning-related information can be collected by the location management function entity by either directly or indirectly accessing and storing positioning-related information exchanged between radio nodes of the radio network, preferably ETSI ITS cooperative awareness messages exchanged between vehicles in the radio network. For a direct access, the positioning-related information exchanged between radio nodes of the radio network could be encoded by the location management function entity itself, e.g., when ETSI ITS cooperative awareness messages (CAMs) are available via an open protocol. For an indirect access, the positioning-related information exchanged between radio nodes of the radio network could be transmitted via and extracted by a network entity, e.g., a server, which provides the extracted positioning-related information to the location management function entity.

Additionally or alternatively, the positioning-related information can be collected by the location management function entity by explicitly requesting for and storing the respective positioning-related information, preferably from the at least one second radio node. Here, the at least one second radio node could be configured by the location management function to provide specifically the requested positioning-related information and/or (all) positioning-related information exchanged between the at least one second radio node and other radio nodes of the radio network. To this end, the 5G-based LTE positioning protocol (LPP) could be extended to contain the information comprised by CAMs at least partially. Herewith, the CAM information is contained in the non-access stratum layer or the protocol layers interpretable by the LPP. Therefore, the CAM information can preferably be part of the LPP protocol itself. Consequently, the approach would also be applicable for a location management function network entity comprised by a user equipment which is out of network coverage and, e.g., only connected to the first radio node via sidelink.

The method according to the first aspect can be understood as a method of operating a location management function entity of a radio network.

According to a second aspect, there is provided a method of receiving a signal comprising positioning-based information provided by a location management function entity of a radio network.

The method according to the second aspect comprises:
- Transmitting a request signal comprising a request for positioning-based information with respect to at least one second radio node of the radio network from a first radio node of the radio network to the location management function entity; and
- receiving a response signal comprising the requested positioning-based information by the first radio node, wherein the positioning-based information comprised by the response signal is based on positioning-related information of the at least one second radio node collected by the location management function entity.

The method according to the second aspect can be understood as a method of operating a radio node of a radio network.

According to a third aspect, there is provided a method of transmitting a signal comprising positioning-based information from a service-providing network entity of a radio network to a first radio node of the radio network.

The method according to the third aspect comprises:
- Receiving a request signal comprising a request for positioning-based information with respect to at least one second radio node of the radio network by the service-providing network entity;
- Transmitting a request signal comprising a request for the positioning-based information and/or a positioning-related information of the at least one second radio node to a location management function entity of the radio network;
- Receiving a response signal comprising the requested positioning-based information and/or the requested positioning-related information by the service-providing network entity, wherein the positioning-related information is collected by the location management function entity and the positioning-based information comprised by the response signal is based on the positioning-related information;
- Optionally, determining the positioning-based information based on the received positioning-related information by the service-providing network entity; and
- Transmitting a response signal comprising the collected positioning-based information to the first radio node by the service-providing network entity, wherein the positioning-based information comprised by the response signal corresponds to the positioning-based information received or determined by the service-providing network entity.

The method according to the third aspect can be understood as a method of operating a service-providing network entity of the radio network. The service-providing network entity may be a core network entity, e.g., a server or a cloud computing entity, a radio access network entity, e.g., a base station, or a user equipment.

According to a fourth aspect, there is provided a method of receiving a signal comprising positioning-based information provided by a service-providing network entity of a radio network.

The method according to the fourth aspect comprises:
- Transmitting a request signal comprising a request for positioning-based information with respect to at least one second radio node of the radio network from a first radio node of the radio network to the service-providing network entity; and
- Receiving a response signal comprising the requested positioning-based information by the first radio node,
wherein the positioning-based information comprised by the response signal is based on positioning-related information of the at least one second radio node collected by a location management function entity of the radio network.

The method according to the fourth aspect can be understood as a method of operating a radio node of a radio network.

According to a fifth aspect, there is provided a method of transmitting a signal comprising positioning-based information and/or positioning-related information from a location management function entity to a service-providing network entity of the radio network.

The method according to the fifth aspect comprises:
- Receiving a request signal comprising a request for positioning-based information and/or positioning-related information with respect to at least one second radio node of the radio network by the location management function entity; and
- Transmitting a response signal comprising the requested positioning-based information and/or positioning-related information from the location management function entity to the service-providing network entity, wherein the positioning-related information is collected by the location management function entity and the positioning-based information comprised by the response signal is based on the positioning-related information.

The method according to the fifth aspect can be understood as a method of operating a location management function entity of a radio network.

According to a sixth aspect, there is provided a first radio node. The first radio node comprises a radio modem, a non-transitory computer readable medium comprising machine-readable instructions, and a processor configured to load and to execute the machine-readable instructions to cause the first radio node to execute the method according to the second and/or the fourth aspect, or its embodiments.

According to a seventh aspect, there is provided a network entity. The network entity comprises a radio modem, a non-transitory computer readable medium comprising machine-readable instructions, and a processor configured to load and to execute the machine-readable instructions to cause the network entity node to execute the method according to the first aspect and/or the third aspect, or its embodiments.

According to an eighth aspect, there is provided a computer program comprising machine-readable instructions to cause
- the first radio node as defined by the sixth aspect to execute the steps of the method according to the second aspect and/or the fourth aspect, and/or
- the network entity as defined by the seventh aspect to execute the steps of the method according to the first aspect and/or the third aspect.

According to a nineth aspect, there is provided a non-transitory computer readable medium having stored thereon the computer program as defined by the eighth aspect.

Preferably, the positioning-related information comprises at least one of the group comprising: Position, speed, heading, acceleration, status of the at least one second radio node. Particularly, the positioning-related information may contain at least one of the information included in an ETSI ITS CAM as specified in ETSI EN 302 637-2. Consequently, the positioning-related information may additionally also include, e.g., lane position, curvature of an actual trajectory, vehicle length and/or width.

The positioning-related information can be considered as a basis to determine the positioning-based information. Specifically, the positioning-based information can be determined by deriving the positioning-based information from the positioning-related information, e.g., by modifying the positioning-related information or calculated a further quantity or parameter based on the positioning-related information. Alternatively, the positioning-related information can be used as the positioning-based information, i.e., the positioning-based information may be identical with the positioning-related information.

According to an embodiment, the positioning-related information, preferably comprising at least one of the information included in an ETSI ITS CAM, can be included in the 5G-based LTE positioning protocol (LPP). For example, the positioning-related information may be contained in a non-access stratum layer or in one or multiple protocol layers interpretable by the LPP. This allows for an efficient collection of positioning-information information by the location management function entity.

Preferably, the positioning-based information comprises
- at least one of the group comprising: Position, speed, heading, acceleration, status of the at least one second radio node and/or
- at least one of a collision risk and/or a time to collision between the first radio node and the at least one second radio node.

Again, the positioning-based information may contain at least one of the information included in an ETSI ITS CAM as specified in ETSI EN 302 637-2. The collision risk and/or the time to collision between the first and the at least one second radio node can be determined based on the positioning-related information of the first and the at least one second radio node, e.g., based on their position, speed, and heading. Here, one or more parameter representing the actual trajectories of the first and the at least one second radio node may be taken into account, e.g., a current curve radius, a steering wheel angle, vehicle dimensions etc.

Specifically, when the at least one second radio node is comprised by a vehicle, positioning-based and/or positioning-related information may optionally further comprise vehicle information such as, e.g., vehicle ID, type, category, vehicle network status (active, inactive, idle), and further possible network status as specified, vehicle dynamic status (parking, active, sleeping, etc.), vehicle battery status, vehicle technical status (faulty, error-free, etc.).

The introduced methods of transmitting and receiving respectively allow a requesting radio node, particularly a UE, to access positioning-based information of a location management function entity of the network in an on-demand service-like manner. Consequently, the requesting radio node can exploit the positioning-based information provided by the location management function to increase the knowledge about other radio nodes, particularly UEs, in its surroundings.

In particular, using the location management function as a service provider for positioning-based information derived from or already comprised by ETSI ITS CAM introduces a proceeding highly beneficial for distributing positioning-based information in a targeted and efficient manner without further increasing broadcast communication. Specifically, by providing the positioning-based information like speed, heading acceleration of other UEs and/or collisions risks with other UEs in the surroundings as a service, the introduced methods allow to complement already existing surround sensing data like camera, radar or lidar data at the UE, thus increasing safety and efficiency on roads.

According to an embodiment of the first aspect, the method further comprises
- Transmitting a request signal for the positioning-related information from the location management function entity to the at least one second radio node, optionally in response to the received request signal; and
- Receiving a response signal comprising the requested positioning-related information of the at least one second radio node by the location management function entity.

By using the request signal current positioning-related information can be requested to provide current, particularly real-time, positioning-based information to the first radio node. This embodiment allows to collect the positioning-related information either on demand, i.e., in case the respective request signal for positioning-based information is received, and/or independent from the request signal, particularly, before receiving a request signal to generate a database with positioning-related information.

According to an embodiment of the first aspect, the method further comprises
- Determining the requested positioning-based information based on the collected positioning-related information by the location management function entity.

The positioning-based information, e.g., a collision risk and/or a time to collision between the first and the at least one second radio node, may can be determined based on the positioning-related information of the first and the at least one second radio node, e.g., based on their position, speed, and heading. This embodiment allows both to use computing resources of the location management function entity and to improve data privacy protection by limiting the access of the first radio node to positioning-related information of the at least one second radio node.

According to an embodiment of the first, second, third, fourth and/or fifth aspect the positioning-based information comprises the respective, i.e., the positioning-based, information for all radio nodes within a specific region of interest. As an example, the specific region of interest may be an area represented by the position of the first radio node and a specified range around its position. This embodiment enables geocasting, i.e., .e., providing positioning-based information related to specific region of interest and/or specific further radio nodes, while at the same time avoiding the data overhead of broadcasting.

According to an embodiment of the first, second, third, fourth and/or fifth aspect the request signal and/or the response signal are transmitted via
- a radio access network of the radio network and/or
- a sidelink channel of the radio network.

Here, the request signal is transmitted from the first radio node to the location management function entity or the service-providing network entity. The response signal is transmitted from the location management function entity and/or the service-providing network entity to the first radio node.

According to an embodiment of the first, second, third, fourth and/or fifth aspect the location management function entity hosting the location management function is
- a core network element or
- a radio node, particularly a user equipment or a base station, of the radio network.

In other words, the location management function can be hosted by a core network element or by a radio node, thus allowing the methods to be carried out also in sidelink configuration.

According to an embodiment of the first, second, third, fourth and/or fifth aspect, the method further comprises outputting, preferably by the first radio node, a signal in response to the transmitted / received response signal comprising the requested positioning-based information. The outputted signal may be a wireless or wired signal. The outputted signal may be an information signal representing the positioning-based information. Based on the outputted signal the positioning-based information, e.g., a collision risk between a vehicle comprising the first radio node and a road user comprising the second radio node, may be presented, e.g., to a driver of the vehicle. Additionally or alternatively, the outputted signal may be a control signal configured to control the first radio node and/or a device comprising or associated with the first radio node based on the positioning-based-information. As an example, a vehicle comprising the first radio node may be controlled, e.g., automatically slowed down, based on a collision risk comprised by the outputted signal.

According to an embodiment, the radio node according to the sixth aspect and/or the network entity according to the seventh aspect are members of a 5G NR network. The radio node may be a user equipment. The radio node may comprise a power supply and/or an antenna coupled to the radio modem of the radio node. The radio node may support device to device, internet of things, and/or V2X communications, particularly according to a 3GPP standard. The network entity may be a core network element, an edge computing element, a base station, or a user equipment.

The non-transitory computer readable medium is preferably configured to store the computer program to be executed by a processor of the radio node and/or the network entity. The non-transitory computer readable media may include RAM, ROM, EEPROM, and any other non-volatile storage device.

### Description of the figures

Exemplary embodiments of the present invention are depicted in the figures, which are not to be construed as limiting the claims, and are explained in greater detail below.
- Fig. 1: schematically shows the 3GPP Release architecture with relevance for positioning;
- Fig. 2: schematically illustrates methods according to the first and the second aspect; and
- Fig. 3: schematically illustrates methods according to the third and the fourth aspect.

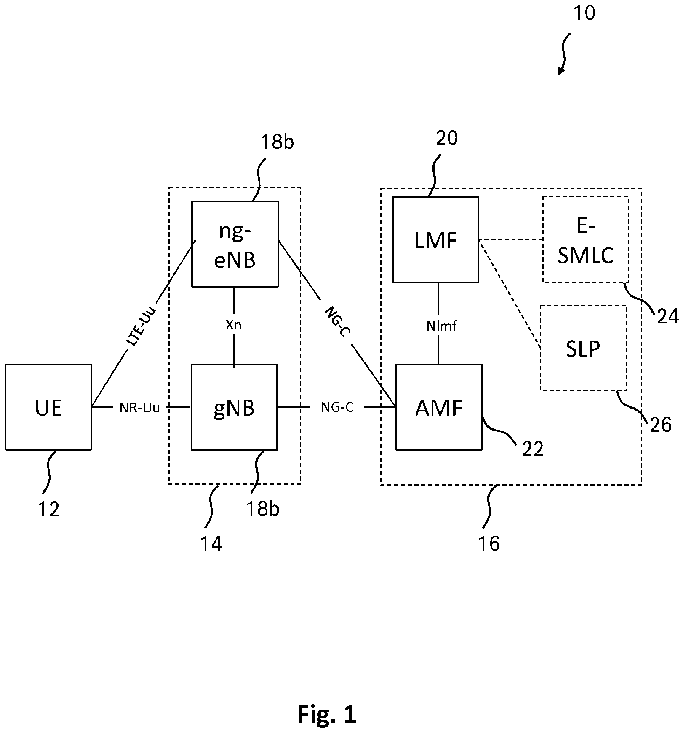

Fig. 1 schematically shows the 3GPP Release 17 architecture with relevance for positioning, see 3GPP TS 23.501 V2.0.1 (2017-12).

Here, a 3GPP radio network 10 comprises a first radio node 12, a radio access network (RAN) 14, and a core network 16. According to this embodiment, the first radio node 12 is a user equipment (UE) 12, e.g., a connectivity unit 12 of a vehicle. The radio access network 14 comprises at least one base station 18a, 18b, which may be a gNB 18a or a ng-eNB 18b. The core network 16 comprises a location management function (LMF) entity 20 and an access and mobility management function (AMF) entity 22. The LMF entity 20 and the AMF entity 22 may be separated or part of the same core network entity. Moreover, the core network 16 may comprise an evolved serving mobile location centre (E-SMLC) entity 24 and a secure user plan location (SUPL) location platform (SLP) entity 26.

The RAN 14 is configured to establish a wireless connection to the UE 12. For the gNB 18a, the RAN 14 is configured to establish a wireless connection to the UE 12 using 5G NR air interface NR-Uu. For the ng-eNB 18b, the RAN 14 is configured to establish a wireless connection to the UE 12 using 4G air interface LTE-Uu. Additionally, the RAN 14 is configured to establish a connection between the gNB 18a and ng-eNB 18b using NG network interface Xn.

Further, the RAN 14 is configured to establish a wired connection to the core network 16. For the gNB 18a, the RAN 14 is configured to establish a wired connection to the AMF entity 22 of the core network 16 using 5G NR control plane interface NG-C. For the ng-eNB 18b, the RAN 14 is configured to establish a wired connection to the AMF entity 22 of the core network 16 also using the 5G NR control plane interface NG-C. Moreover, the LMF entity 20 and the AMF entity 22 are connected via the service based Nlmf interface.

According to this embodiment, the UE 12 comprises a radio modem, a non-transitory computer readable medium comprising machine-readable instructions, and a processor configured to load and to execute the machine-readable instructions to cause the U E 12 to execute the method according to the second aspect of the invention, i.e., to receive a signal comprising positioning-based information provided by the LMF entity 20 of a radio network 10.

Specifically, the U E 12 is configured to transmit a request signal comprising a request for positioning-based information with respect to at least one second UE of the radio network 10 from the UE 12 to the LMF entity 20. Further, the UE 12 is configured to receive a response signal comprising the requested positioning-based information, wherein the positioning-based information comprised by the response signal is based on positioning-related information of the at least one second UE collected by the LMF entity 20.

The LMF entity 20 comprises a non-transitory computer readable medium comprising machine-readable instructions and a processor configured to load and to execute the machine-readable instructions to execute the method according to the first aspect of the invention, i.e., to cause the LMF 20 to transmit a signal from the LMF entity 20 to the UE 12.

Specifically, the LMF entity 20 is configured to receive the request signal comprising the request for positioning-based information with respect to the at least one second UE transmitted from the UE 12. Further, the LMF entity 20 is configured to transmit the response signal comprising the requested positioning-based information to the UE 12, wherein the positioning-based information comprised by the response signal is based on positioning-related information of the at least one second UE collected by the LMF entity 20.

Specifically, the LMF entity 20 may be configured to collect positioning-related information comprised and/or derived from ETSI ITS messages, particularly CAMs, exchanged between radio nodes of the radio network 10. To this end, the radio nodes, e.g., comprised by vehicles, may be configured to transmit ETSI ITS messages, particularly CAMs, by using 3GPP networks, e.g., in a V2X architecture or particularly in a V2N2X architecture type. Transmitting CAMs and/or further awareness information using a 3GPP network allows the LMF entity 20 to collect the information comprised by the CAMs.

Consequently, as an example, a vehicle may request positioning-based information and/or further awareness information about one or several other vehicles from the LMF entity 20. The LMF entity 20 is configured to look up the one or several target vehicles in a database associated with the LMF entity 20 and to provide the requested position-based information, e.g., position, heading, speed, etc., of the one or several target vehicles.

Furthermore, the LMF entity 20 may also be configured to enable geocasting, i.e., providing positioning-based information related to specific region of interest and/or specific further radio nodes, e.g., comprised by further vehicles. Consequently, as an example, a vehicle may request information about a region of interest area around its own position with a specified range, e.g., specific range in meters, specific communication/coverage range, and/or specific zone/area on a map (using, e.g., a zone ID). The LMF entity 20 is configured to provide positioning-based information, e.g., using a list, of all vehicles in the specified region of interest, thus providing information about position, heading, acceleration, status (active/inactive/idle), and optionally further awareness information.

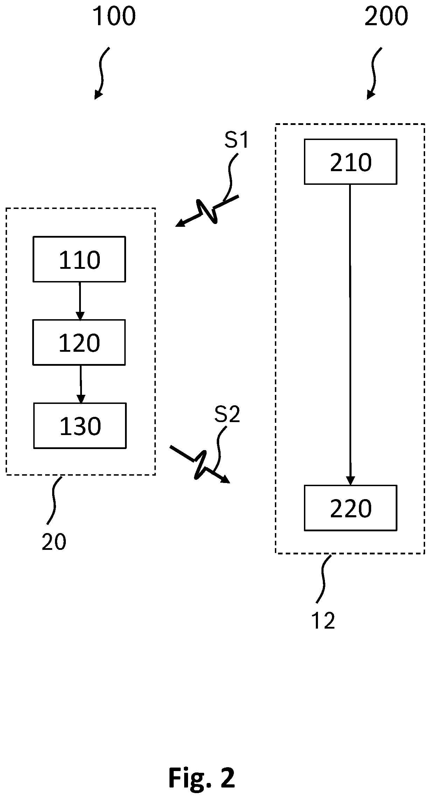

Fig. 2 schematically illustrates methods according to the first and the second aspect.

According to a first aspect of the invention, there is provided a method 100 of transmitting a signal comprising positioning-based information from a location management function entity of a radio network to a first radio node of the radio network. According to the second aspect of the invention, there is provided a corresponding method 200 of receiving a signal comprising positioning-based information provided by a location management function entity of a radio network.

The method 200 comprises a step 210 of transmitting a request signal S1 comprising a request for positioning-based information with respect to at least one second radio node of the radio network from a first radio node of the radio network to the location management function entity. Preferably, the request signal S1 is transmitted using an air interface to a base station of the radio network and a control plane interface from the base station to the location management function entity.

The method 100 comprises a step 120 of determining the requested positioning-based information based on positioning-related information collected by the location management function entity.

To collect the positioning-related information, the method 100 may additionally comprise the steps of
- Transmitting a request signal for the positioning-related information from the location management function entity to the at least one second radio node, optionally in response to the received request signal; and
- Receiving a response signal comprising the requested positioning-related information of the at least one second radio node by the location management function entity.

The method 100 further comprises a step 130 of transmitting a response signal S2 comprising the requested and determined positioning-based information from the location management function entity to the first radio node. Preferably, the response signal S2 is transmitted using the control plane interface from the location management function entity to the base station and the air interface from the base station to the first radio node.

The method 200 further comprises a step 220 of receiving the response signal S2 comprising the requested positioning-based information by the first radio node, wherein the positioning-based information comprised by the response signal S2 is based on the positioning-related information of the at least one second radio node collected by the location management function entity.

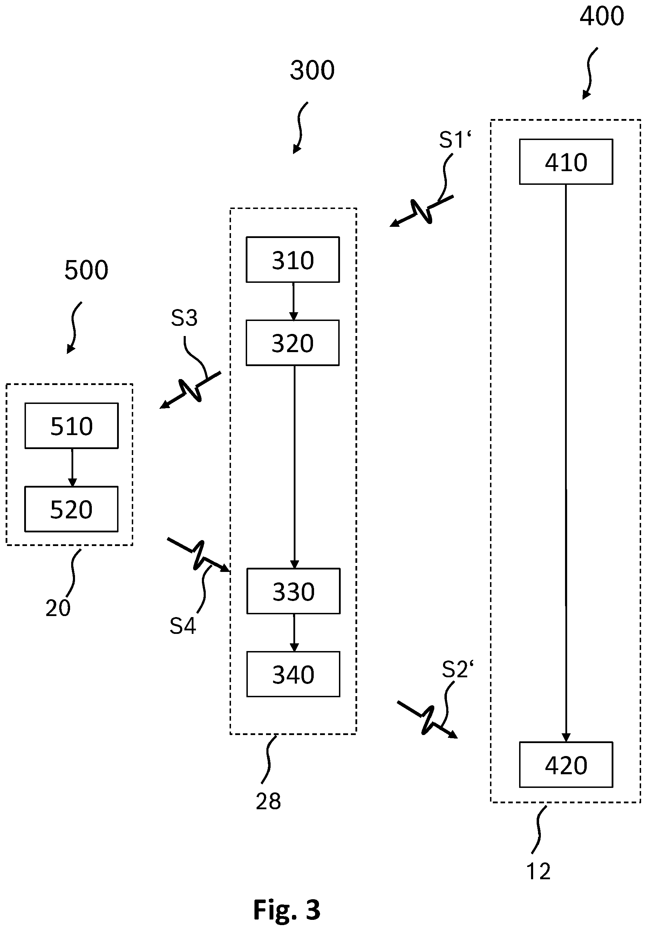

Fig. 3 schematically illustrates methods according to the third, the fourth and the fifth aspect.

According to a third aspect of the invention, there is provided a method 300 of transmitting a signal comprising positioning-based information from a service-providing network entity of a radio network to a first radio node of the radio network. According to the fourth aspect of the invention, there is provided a corresponding method 400 of receiving a signal comprising positioning-based information provided by a service-providing network entity of a radio network. According to the fifth aspect of the invention, there is provided a corresponding method 500 of transmitting a signal comprising positioning-based information and/or positioning-related information from a location management function entity to a service-providing network entity of the radio network.

The method 400 comprises a step 410 of transmitting a request signal S1' comprising a request for positioning-based information with respect to at least one second radio node of the radio network from a first radio node 12 of the radio network to the service-providing network entity 28. Preferably, the request signal S1' is transmitted to a base station of the radio network using an air interface and from the base station to the service-providing network entity 28 using a control plane interface.

The method 300 comprises a step 310 of receiving the request signal S1' transmitted from the first radio node 12 by the service-providing network entity 28.

The method 300 comprises a step 320 of transmitting a request signal S3 comprising a request for the positioning-based information and/or a positioning-related information of the at least one second radio node to a location management function entity 20 of the radio network. Preferably, the request signal S3 is transmitted from the service-providing network entity 28 to the location management function entity 20 using a core network interface.

The method 500 comprises a step 510 of receiving the request signal S3 comprising the request for positioning-based information and/or positioning-related information with respect to at least one second radio node by the location management function entity 20. The method 500 further comprises a step 520 of transmitting a response signal S4 comprising the requested positioning-based information and/or positioning-related information from the location management function entity 20. to the service-providing network entity 28.

The method 300 further comprises a step 330 of receiving a response signal S4 comprising the requested positioning-based information and/or the requested positioning-related information by the service-providing network entity 28. Here, the positioning-based information comprised by the response signal S4 is based on the positioning-related information and the positioning-related information is collected by the location management function entity 20. Preferably, the response signal S4 is transmitted from the location management function entity 20 to the service-providing network entity 28 to using the core network interface.

Optionally, the method 300 may further comprise a step of determining the positioning-based information based on the received positioning-related information by the service-providing network entity 28.

The method 300 further comprises a step 340 of transmitting a response signal S2' comprising the collected positioning-based information to the first radio node by the service-providing network entity 28, wherein the positioning-based information comprised by the response signal corresponds to the positioning-based information received or determined by the service-providing network entity 28. Preferably, the response signal S2' is transmitted from the service-providing network entity 28 to the base station using the control plane interface and from the base station to the first radio node 12 using the air interface.

The method 400 further comprises a step 420 of receiving the response signal S2' comprising the requested positioning-based information by the first radio node 12, wherein the positioning-based information comprised by the response signal S2' is based on positioning-related information of the at least one second radio node collected by the location management function entity 20 of the radio network.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1. A method (100) of transmitting a signal (S2) comprising positioning-based information from a location management function entity (20) of a radio network (10) to a first radio node (12) of the radio network (10), the method (100) comprising:
- Receiving (110) a request signal (S1) comprising a request for positioning-based information with respect to at least one second radio node of the radio network (10) by the location management function entity (20); and
- Transmitting (130) a response signal (S2) comprising the requested positioning-based information from the location management function entity (20) to the first radio node (12), wherein the positioning-based information comprised by the response signal (S2) is based on positioning-related information of the at least one second radio node collected by the location management function entity (20).

2. The method (100) according to claim 1, further comprising:
- Transmitting a request signal for the positioning-related information from the location management function entity (20) to the at least one second radio node, optionally in response to the received request signal (S1); and
- Receiving a response signal comprising the requested positioning-related information of the at least one second radio node by the location management function entity (20).

3. The method (100) according to claim 1 or 2, further comprising:
- Determining (120) the requested positioning-based information based on the collected positioning-related information by the location management function entity (20).

4. A method (200) of receiving a signal (S2) comprising positioning-based information provided by a location management function entity (20) of a radio network (10), the method comprising:
- Transmitting (110) a request signal (S1) comprising a request for positioning-based information with respect to at least one second radio node of the radio network (10) from a first radio node (12) of the radio network (10) to the location management function entity (20); and
- Receiving (120) a response signal (S2) comprising the requested positioning-based information by the first radio node (12), wherein the positioning-based information comprised by the response signal (S2) is based on positioning-related information of the at least one second radio node collected by the location management function entity (20).

5. A method (300) of transmitting a signal (S2') comprising positioning-based information from a service-providing network entity of a radio network (10) to a first radio node (12) of the radio network (10), the method (300) comprising:
- Receiving (310) a request signal (S1') comprising a request for positioning-based information with respect to at least one second radio node of the radio network (10) by the service-providing network entity (28);
- Transmitting (320) a request signal (S3) comprising a request for the positioning-based information and/or a positioning-related information of the at least one second radio node to a location management function entity (20) of the radio network (10);
- Receiving (330) a response signal (S4) comprising the requested positioning-based information and/or the requested positioning-related information by the service-providing network entity (28), wherein the positioning-related information is collected by the location management function entity (20) and the positioning-based information comprised by the response signal (S4) is based on the positioning-related information;
- Optionally, determining the positioning-based information based on the received positioning-related information by the service-providing network entity (28); and
- Transmitting (340) a response signal (S2') comprising the collected positioning-based information to the first radio node (12) by the service-providing network entity (28), wherein the positioning-based information comprised by the response signal (S2') corresponds to the positioning-based information received or determined by the service-providing network entity (28).

6. A method (400) of receiving a signal (S2') comprising positioning-based information provided by a service-providing network entity (28) of a radio network (10), the method comprising:
- Transmitting (410) a request signal (S1') comprising a request for positioning-based information with respect to at least one second radio node of the radio network (10) from a first radio node (12) of the radio network (10) to the service-providing network entity; and
- Receiving a response signal (S2') comprising the requested positioning-based information by the first radio node (12), wherein the positioning-based information comprised by the response signal (S2') is based on positioning-related information of the at least one second radio node collected by a location management function entity (20) of the radio network (10).

7. A method (500) of transmitting a signal (S4) comprising positioning-based information and/or positioning-related information from a location management function entity (20) to a service-providing network entity (28) of the radio network (10), the method (500) comprising:
- Receiving (510) a request signal (S3) comprising a request for positioning-based information and/or positioning-related information with respect to at least one second radio node of the radio network (10) by the location management function entity (20); and
- Transmitting (520) a response signal (S4) comprising the requested positioning-based information and/or positioning-related information from the location management function entity (20) to the service-providing network entity (28), wherein the positioning-related information is collected by the location management function entity (20) and the positioning-based information comprised by the response signal (S4) is based on the positioning-related information.

8. The method (100, 200, 300, 400, 500) according to one of the preceding claims, wherein the positioning-related information comprises at least one of the group comprising: Position, speed, heading, acceleration, status of the at least one second radio node.

9. The method (100, 200, 300, 400, 500) according to one of the preceding claims, wherein the positioning-based information comprises
- at least one of the group comprising: Position, speed, heading, acceleration, status of the at least one second radio node and/or
- at least one of a collision risk and/or a time to collision between the first radio node (12) and the at least one second radio node.

10. The method (100, 200, 300, 400, 500) according to one of the preceding claims, wherein the positioning-based information comprises the respective information for all radio nodes within a specific region of interest.

11. The method (100, 200, 300, 400, 500) according to one of the preceding claims, wherein the request signal (S1, S1') and/or the response signal (S2, S2') are transmitted via
- a radio access network of the radio network (10) and/or
- a sidelink channel of the radio network (10).

12. The method (100, 200, 300, 400, 500) according to one of the preceding claims, wherein the location management function entity (20) hosting the location management function is
- a core network element or
- a radio node, particularly a user equipment or a base station, of the radio network (10).

13. A radio node (12), comprising
- a radio modem,
- a non-transitory computer readable medium comprising machine-readable instructions, and
- a processor configured to load and to execute the machine-readable instructions to cause the radio node (12) to execute the method (200, 400) according to one of claims 4, 6 or 8 to 12.

14. A network entity (20, 28), comprising
- a radio modem,
- a non-transitory computer readable medium comprising machine-readable instructions, and
- a processor configured to load and to execute the machine-readable instructions to cause the network entity (20, 28) to execute the method (100, 300, 500) according to one of claims 1, 5 or 7 to 12.

15. A computer program comprising machine-readable instructions to cause
- the radio node (12) of claim 13 to execute the method (200, 400) according to one of claims 4, 6 or 8 to 12, and/or
- the network entity (20, 28) of claim 14 to execute the method (100, 300, 500) according to one of claims 1, 5 or 7 to 12.

16. A non-transitory computer readable medium having stored thereon the computer program of claim 15.
